# EUROPEAN PATENT APPLICATION

(11) **EP 2 533 521 A1**
(43) Date of publication of application: **12.12.2012**
(21) Application number: 11739556.6
(22) Date of filing: 02.02.2011
(51) Int. Cl.: H04N 5/374, H04N 5/361

(54) **SOLID-STATE IMAGE CAPTURE DEVICE**

(30) Priority: 05.02.2010 JP 2010023914
(71) Applicant: Konica Minolta Advanced Layers, Inc., Hachioji-shi Tokyo 192-8505 (JP)
(72) Inventor: KUSUDA, Masayuki, Hino-shi Tokyo 191-8511 (JP)
(74) Representative: HOFFMANN EITLE
(86) International application number: PCT/JP2011/000574
(87) International publication number: WO 2011/096207

(57) **Abstract**

A control part 2 controls a pixel circuit GC so that an exposure period TE for causing a photoelectric conversion element PD to accumulate signal charges, and a transfer period TT for transferring the signal charges accumulated in the exposure period TE to FD are repeated. Then, the control part 2 divides the exposure period TE into two periods of a first half period TF and a latter half period TB so as to apply a negative bias voltage to a gate of a transfer transistor TX in the first half period TF, and apply an intermediate potential VM for driving the pixel circuit GC with a linear log characteristic to the gate of the transfer transistor TX in the latter half period TB.

## Description

### Technical Field

The present invention relates to a CMOS type solid-state image capture device.

### Background Art

In recent years, there has been known a solid-state image capture device formed of pixel circuits each having a linear log characteristic in which a linear characteristic occurs on the lower brightness side, and a logarithmic characteristic occurs on the higher brightness side with the knee point as a boundary in order to expand the dynamic range.

For example, in Patent Document 1, there is disclosed a pixel circuit which includes a buried type photodiode, and a transfer transistor for transferring signal charges accumulated in the photodiode to a floating diffusion. In the pixel circuit, by driving the transfer transistor with an intermediate potential in the exposure period, the signal charges accumulated in the photodiode are logarithmically compressed, thereby to implement a linear log characteristic.

The pixel circuit described in Patent Document 1 adopts a buried type photodiode. For this reason, it is possible to suppress the dark current generated at the photodiode surface. This can suppress the variations in signal components due to the dark current at each pixel circuit. Further, with the pixel circuit of Patent Document 1, by correlated double sampling, the noise components are removed. For this reason, it is possible to remove a kTC noise generated upon resetting the floating diffusion.

However, in Patent Document 1, by adopting the buried type photodiode, the dark current generated at the photodiode surface is suppressed. However, in the overall period of the exposure period, the transfer transistor is applied with the intermediate potential. Accordingly, in Patent Document 1, it is difficult to suppress the dark current generated at the interface between the Si substrate and SiO₂ formed at the underlying part of the gate of the transfer transistor. Therefore, there is room for further improvement in order to suppress the dark current generated at the pixel circuit.

Patent Document 1: Japanese Patent Application Publication No. 2006-50544

### Summary of the Invention

The present invention provides a solid-state image capture device capable of suppressing more dark current.

A solid-state image capture device in accordance with one aspect of the present invention is a CMOS type solid-state image capture device having a pixel circuit having a linear log characteristic including a linear characteristic and a logarithmic characteristic with a knee point as a boundary. The pixel circuit includes: a buried type photoelectric conversion element for accumulating signal charges by exposure of an object; a floating diffusion for converting the signal charges accumulated by the photoelectric conversion element to a voltage signal; a transfer transistor for transferring the signal charges accumulated by the photoelectric conversion element to the floating diffusion; and a control part for controlling the pixel circuit such that an exposure period for causing the photoelectric conversion element to accumulate the signal charges and a transfer period for transferring the signal charges accumulated in the exposure period to the floating diffusion are repeated. The control part divides the exposure period into a plurality of periods so as to apply an intermediate potential for driving the pixel circuit with the linear log characteristic to a gate of the transfer transistor in at least one period, and apply a bias voltage having a voltage value in a direction of closing the gate more than the intermediate potential to the gate of the transfer transistor in the remaining periods of the exposure period.

### Brief Description of the Drawings

[Fig.1] Fig. 1 is an overall configuration view of a solid-state image capture device in accordance with an embodiment of the present invention.
[Fig.2] Fig. 2 is a circuit diagram of a pixel circuit forming an image array part of Fig. 1.
[Fig.3] Fig. 3A shows a timing chart of the pixel circuit shown in Fig. 2, and Fig. 3B is a graph showing the photoelectric conversion characteristics of the pixel circuit driven according to the timing chart of Fig. 3A.
[Fig.4] Fig. 4 is a circuit diagram of a vertical scanning part when a circuit of a comparable example is adopted as the vertical scanning part shown in Fig. 1.
[Fig.5] Fig. 5 is a timing chart showing the operation of the vertical scanning part shown in Fig. 4.
[Fig.6] Fig. 6 is a circuit diagram of one column ADC forming a column ADC array part shown in Fig. 1.
[Fig.7] Fig. 7 is a timing chart showing the operation of the column ADC shown in Fig. 6.
[Fig.8] Fig. 8 is a timing chart showing the outline of the operation of the solid-state image capture device shown in Fig. 1.
[Fig.9] Fig. 9 is a circuit diagram of a vertical scanning part in accordance with an embodiment of the present invention.
[Fig.10] Fig. 10 is a timing chart of the vertical scanning part shown in Fig. 9.

### Description of Embodiments

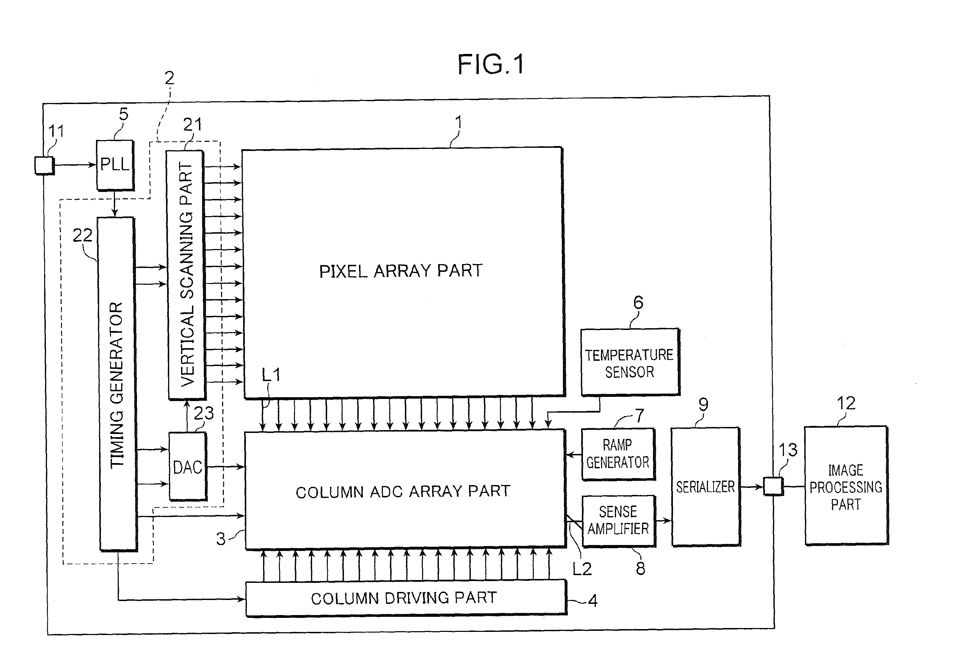

Below, a solid-state image capture device in accordance with an embodiment of the present invention will be described by reference to the accompanying drawings. Fig. 1 is an overall configuration view of a solid-state image capture device in accordance with an embodiment of the present invention. As shown in Fig. 1, the solid-state image capture device is a CMOS (Complementary Metal Oxide Semiconductor) type solid-state image capture device of a column parallel type AD conversion system (column AD conversion system), and includes a pixel array part 1, a control part 2, a column ADC array part 3, a PLL 5, a temperature sensor 6, a ramp generator 7, a sense amplifier 8, a serializer 9, a clock terminal 11, an image processing part 12, and an output terminal 13.

In the present embodiment, the pixel array part 1 to the output terminal 13 except for the image processing part 12 are integrated in one chip, and form a solid-state image capture element.

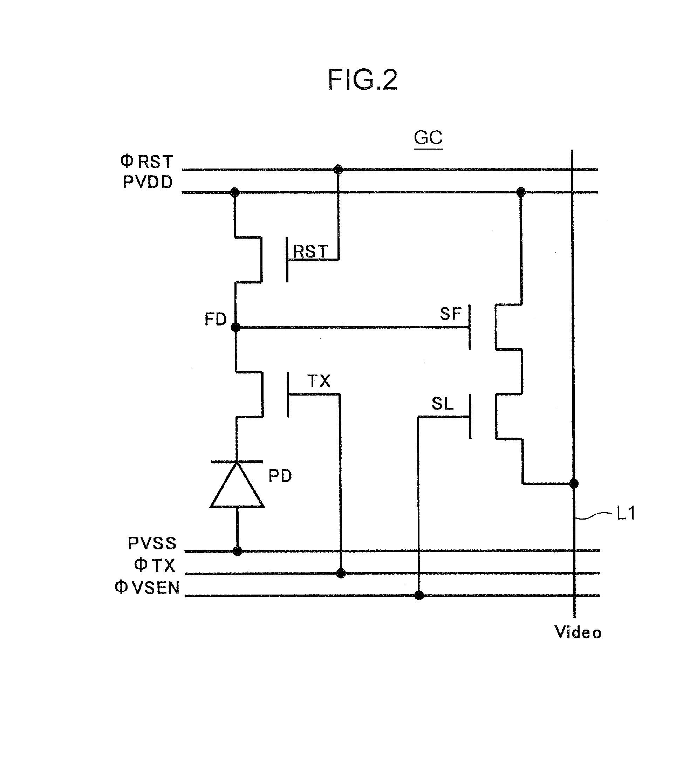

The image array part 1 is formed of a plurality of pixel circuits GC arrayed in a matrix ofN (N is a positive integer of 2 or more) rows x M (M is a positive integer) columns (see Fig. 2). Incidentally, in the example of Fig. 1, the pixel circuits GC are arrayed in a matrix of 14 rows x 18 columns.

Fig. 2 is a circuit diagram of the pixel circuit GC shown in Fig. 1. As shown in Fig. 2, the pixel circuit GC is formed of a pixel circuit GC of CMOS including a photoelectric conversion element PD, a transfer transistor TX, a reset transistor RST, an amplification transistor SF, and a column selection transistor SL.

The photoelectric conversion element PD is formed of a buried type photoelectric conversion element, and receives light from an object, and accumulates signal charges according to the received light quantity. Herein, the photoelectric conversion element PD is connected to the source of the transfer transistor TX at the cathode thereof. Further, the photoelectric conversion element PD receives PVSS which is a driving voltage at the anode thereof.

The transfer transistor TX is formed of, for example, an n channel type MOS (Metal Oxide Semiconductor) transistor, and transfers the signal charges accumulated by the photoelectric conversion element PD to a floating diffusion (which will be hereinafter described as "FD"). The transfer transistor TX receives φTX which is the driving voltage at the gate thereof, and is driven by φTX. Adjustment of the voltage of φTX results in the application of an ON voltage, an intermediate potential, and a bias voltage to the gate of the transfer transistor TX. Whereas, the drain of the transfer transistor TX is connected with FD.

The FD accumulates the signal charges transferred from the photoelectric conversion element PD, and converts the accumulated signal charges into a voltage signal having a level according to the magnitude thereof.

The reset transistor RST is formed of, for example, an n channel type MOS transistor, and receives φRST which is a signal for turning on/off the reset transistor RST at the gate thereof, receives PVDD which is the driving voltage at the drain thereof, and is connected to the gate of the amplification transistor SF via FD at the source thereof.

Then, the reset transistor RST is turned on/off under control of a vertical scanning part 21, and resets FD. Incidentally, PVDD and PVSS are outputted from a voltage source not shown, and φRST is outputted from the vertical scanning part 21.

The amplification transistor SF is formed of, for example, an n channel type MOS transistor, is connected to the transfer transistor TX and the reset transistor RST via FD, receives PVDD which is the driving voltage at the drain thereof, and is connected to the row selection transistor SL at the source thereof. Then, the amplification transistor SF amplifies a pixel signal outputted from FD, and outputs the signal to the row selection transistor SL.

The row selection transistor SL is formed of, for example, an n channel type MOS transistor, receives φVSEN which is a row selection signal at the gate, is connected to the amplification transistor SF at the drain thereof, and is connected to the column ADC of the corresponding column via a vertical signal line L1. Then, the row selection transistor SL outputs the pixel signal amplified by the amplification transistor SF via the vertical signal line L1 to the column ADC of the corresponding column. Herein, φVSEN is outputted from the vertical scanning part 21.

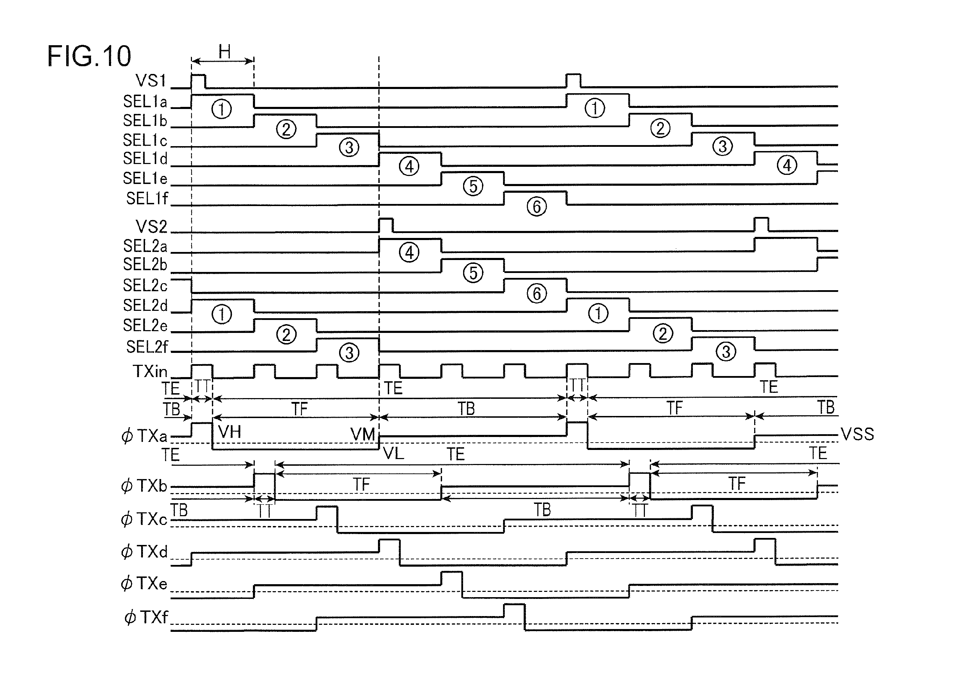

Returning to Fig. 1, the control part 2 includes the vertical scanning part 21, a timing generator 22, and a digital analogue converter (which will be hereinafter described as "DAC") 23. As shown in Fig. 10, the control part 2 controls the pixel circuit GC so that the exposure period TE in which signal charges are accumulated in the photoelectric conversion element PD, and a transfer period TT in which the signal charges accumulated during the exposure period TE are transferred to FD are repeated.

Then, the control part 2 divides the exposure period TE into a plurality of periods. The control part 2 applies an intermediate potential for driving the pixel circuit GC with a linear log characteristic to the gate of the transfer transistor TX in at least one period, and applies a bias voltage having a voltage value in the direction of closing the gate more than the intermediate potential to the gate of the transfer transistor TX in the remaining periods of the exposure period TE.

In the present embodiment, the control part 2 divides, as shown in Fig. 10, one exposure period TE into two periods of the first half period TF and the latter half period TB so as to apply a bias voltage VL to the gate of the transfer transistor TX in the first half period TF, and apply an intermediate potential VM to the gate of the transfer transistor TX in the latter half period TB.

For this reason, it becomes possible for the photoelectric conversion element PD to accumulate signal charges with a linear characteristic in the first half period TF, and to accumulate signal charges with a linear log characteristic in the latter half period TB. Even when a bright object is exposed, the signal charges can be accumulated without being saturated. Thus, the linear log characteristic is kept, which enables the dynamic range to be ensured.

Herein, the transfer transistor TX is formed of an n channel type MOS transistor. For this reason, a voltage value of a lower value than the intermediate potential VM may be desirably adopted as the bias voltage VL.

In the transfer transistor TX, as the opening degree of the gate increases, the dark current generated at the interface between the substrate layer and the insulation layer at the underlying part of the gate increases. Accordingly, in the first half period TF, the bias voltage VL lower than the intermediate potential VM is applied to the transfer transistor TX. This results in the reduction of the opening degree of the gate of the transfer transistor TX, which can reduce the dark current generated at the transfer transistor TX. As a result, the dark current flowing backward from the transfer transistor TX to the photoelectric conversion element PD is further reduced. This can suppress the dark current included in the signal charges accumulated in the photoelectric conversion element PD.

Therefore, when 0 is adopted as the bias voltage VL, it becomes possible to fully close the gate of the transfer transistor TX, which enables the dark current generated at the transfer transistor TX to be more suppressed.

Whereas, when a negative value is adopted as the bias voltage VL, it becomes possible to generate holes on the bottom side of the gate of the transfer transistor TX. The electrons generated on the bottom side of the gate are combined with the holes to be eliminated, which can further suppress the dark current generated at the transfer transistor TX. This results in a further reduction of the dark current flowing backward from the transfer transistor TX to the photoelectric conversion element PD. As a result, it becomes possible to further suppress the dark current included in the signal charges accumulated in the photoelectric conversion element PD.

Incidentally, in the present embodiment, the control part 2 divides, as shown in Fig. 10, the exposure period TE into two parts so that the first half period TF and the latter half period TB are almost the same in length.

Herein, in the latter half period TB, φTX is set at the intermediate potential VM. This is for making the photoelectric conversion characteristic of the pixel circuit GC the linear log characteristic. Herein, the linear log characteristic denotes the photoelectric conversion characteristic that the linear characteristic occurs on the lower brightness side and the logarithmic characteristic occurs on the higher brightness side with the knee point as a boundary therebetween.

Namely, φTX is set at the intermediate potential VM. As a result, until the potential of the signal charges accumulated at the photoelectric conversion element PD becomes the intermediate potential VM, signal charges are accumulated with a linear characteristic with respect to the light quantity in the photoelectric conversion element PD. On the other hand, when the potential of the signal charges accumulated at the photoelectric conversion element PD exceeds the intermediate potential VM, the photoelectric conversion element PD accumulates signal charges while leaking a part thereof to FD, and hence accumulates signal charges with a log characteristic with respect to the light quantity. This enables the pixel circuit GC to have the linear log characteristic.

Incidentally, as the value of the intermediate potential VM, there may be desirably adopted a preset value experimentally obtained in order to implement the linear log characteristic. Whereas, as the value of the bias voltage VL, there may be desirably adopted a preset value which is a preferable value for suppressing the dark current, and has been experimentally obtained.

Returning to Fig. 1, the vertical scanning part 21 selects the pixel circuits GC of respective rows forming the pixel array part 1 in synchronism with various signals such as vertical synchronization signals outputted from the timing generator 22, and thereby vertically scans the pixel array part 1. Further, the vertical scanning part 21 outputs various signals to respective pixel circuits GC of the selected row, and thereby drives respective pixel circuits GC.

The timing generator 22 generates timing signals which become necessary for controlling the solid-state image capture device, such as vertical synchronization signals and horizontal synchronization signals in response to clock signals supplied from the PLL 5, and conducts the overall control of the solid-state image capture device. Further, the timing generator 22 includes a register for storing the set values of the timing signal, and the like. Incidentally, the register performs, for example, serial communication with an external device connected via a communication terminal not shown, so that the set value is written therein. Herein, the set values include, for example, set values for determining the values of the ON voltage, the intermediate potential, and the bias voltage for driving the transfer transistor TX (see Fig. 2) described later.

In the present embodiment, in the pixel array part 1, a plurality of kinds of pixel circuits GC for acquiring pixel signals of a plurality of color components such as R (red), G (green), and B (blue) are arrayed regularly according to a prescribed array system such as Bayer array. Accordingly, the timing generator 22 previously stores the set values for prescribing the intermediate potential and the bias voltage of each kind of the pixel circuit GC in the register, and controls the DAC 23 and the vertical scanning part 21 so that each pixel circuit GC is driven by the intermediate potential and the bias voltage prescribed by the set values according to the kind of the pixel circuit GC.

Specifically, the timing generator 22 previously stores which kind of pixel circuit GC is arrayed at each row and each column of the pixel array part 1. For example, when the vertical scanning part 21 selects a given one row, the timing generator 22 identifies what kind of pixel circuit GC is arrayed at each column of the row. Then, the timing generator 22 outputs the set value according to the identified kind to the DAC 23 for digital analog conversion. Then, the timing generator 22 controls the vertical scanning part 21 so that the intermediate potential and the bias voltage according to the identified kind are outputted to the transfer transistor TX of the pixel circuit GC of each column at the row selected by the vertical scanning part 21.

Thus, each pixel circuit GC is driven by the intermediate potential according to the kind thereof. As a result, it is possible to drive each pixel circuit GC at an appropriate dynamic range according to the kind thereof. Further, each pixel circuit GC is driven by the bias voltage according to the kind thereof. As a result, it is possible to effectively suppress the dark current generated at the transfer transistor TX of each pixel circuit GC.

Further, the timing generator 22 changes the intermediate potential of each pixel circuit GC so that the variation in knee point at each pixel circuit GC is suppressed based on the temperature data detected by a temperature sensor 6.

Herein, the temperature data detected by the temperature sensor 6 is converted into a digital form at the column ADC array part 3, and is outputted to the image processing part 12. The image processing part 12 corrects the intermediate potential determined for each kind of the pixel circuit GC according to the temperature data converted into a digital form, and writes the set value prescribing the intermediate potential after correction into the register of the timing generator 22. Herein, the image processing part 12 previously stores, for example, the function indicating the relation between the intermediate potential and the temperature for every kind of the pixel circuit GC. Then, the image processing part 12 determines the intermediate potential corresponding to the temperature detected by the temperature sensor 6 in accordance with the function, and writes the set value for driving the pixel circuit GC with the intermediate potential to the register.

Then, the timing generator 22 drives the transfer transistor TX of the pixel circuit GC according to the set value rewritten by the image processing part 12. This suppresses the variations in knee point of each pixel circuit GC due to the variations in junction temperature.

The DAC (digital analog converter) 23 converts a digital signal outputted from the timing generator 22 into an analog signal, and supplies the analog signal to the vertical scanning part 21. For example, the DAC 23 converts the set values for prescribing the intermediate potential and the bias voltage outputted from the timing generator 22 into an analog signals, generates the intermediate potential and the bias voltage, and supplies them to the vertical scanning part 21.

The column ADC array part 3 includes M column ADCs corresponding to respective columns of the pixel array part 1, and one column ADC for analog-digital converting the analog temperature data outputted from the temperature sensor 6. Each column ADC is connected with the pixel circuits GC of each column via a vertical signal line L1 corresponding to each column of the pixel array part 1. Then, the column ADC reads a pixel signal from the pixel circuit GC of the row selected by the vertical scanning part 21, and performs a correlated double sampling processing and an analog-digital conversion processing, and holds the resulting digital video signals.

A column driving part 4 is formed of, for example, a shift register. Then, the column driving part 4 successively outputs column selection signals in synchronization with horizontal synchronization signals outputted from the timing generator 22 to the column ADCs in one horizontal scanning period, thereby to select the column ADCs of each column cyclically. As a result, the column ADC array part 3 is horizontally scanned, so that the digital video signals held by the column ADCs of each column are successively outputted to a sense amplifier 8.

The PLL 5 multiplies clock signals supplied from an external device via a clock terminal 11, and outputs the signals to the timing generator 22. In the present embodiment, clock signals of, for example, 54 MHz are supplied to the clock terminal 11. The PLL 5 double-multiplies the 54 MHz clock signals, and supplies 108 MHz clock signals to the timing generator 22.

The temperature sensor 6 detects the junction temperature which is the temperature of the inside of the solid-state image capture device, and outputs analog temperature data in proportion to the junction temperature to the column ADC not connected with the pixel circuit GC. In the example of Fig. 1, as the column ADC not connected with the pixel circuit GC, there is adopted the column ADC at the rightmost column of the column ADC array part 3. Then, the temperature data outputted from the temperature sensor 6 is outputted to the column ADC at the rightmost column, and is analog-digital converted.

A ramp generator 7 generates a ramp signal, and outputs the signal to each column ADC. The sense amplifier 8 amplifies the digital video signal outputted from the column ADC array part 3 via a horizontal signal line L2, and outputs it to a serializer 9. In the present embodiment, the column ADC generates a 14-bit digital video signal, shifts the phase of each bit signal by 180 degrees, and outputs a total of 28 signals including signals shifted in phase by 180 degrees, and signals not shifted in phase to the sense amplifier 8. Accordingly, the total number of the horizontal signal lines L2 connecting the column ADC array part 3 and the sense amplifier 8 is 28. Then, the sense amplifier 8 respectively amplifies the signals flowing through the 28 horizontal signal lines L2, forms the waveforms of respective signals, and outputs the signals to the serializer 9.

The serializer 9 is formed of a serializer according to, for example, the LVDS (Low Voltage differential singalings) standard. Then, the serializer 9 differential-amplifies the signals outputted in parallel from the sense amplifier 8 via the 28 horizontal signal lines L2, into 14-bit signals. Then, the serializer 9 converts the 14-bit signals from parallel signals into serial signals, and outputs them to an output terminal 13. The output terminal 13 outputs the signals from the serializer 9 to the image processing part 12.

The image processing part 12 is formed of, for example, a special-purpose hardware circuit, and performs various image processings on the video signals outputted from respective column ADCs. In the present embodiment, the image processing part 12 performs a processing of determining the intermediate potential to be applied to the gate of the transfer transistor TX of each pixel circuit GC according to the temperature data detected by the temperature sensor 6 as described above, and suppressing the variations in knee point.

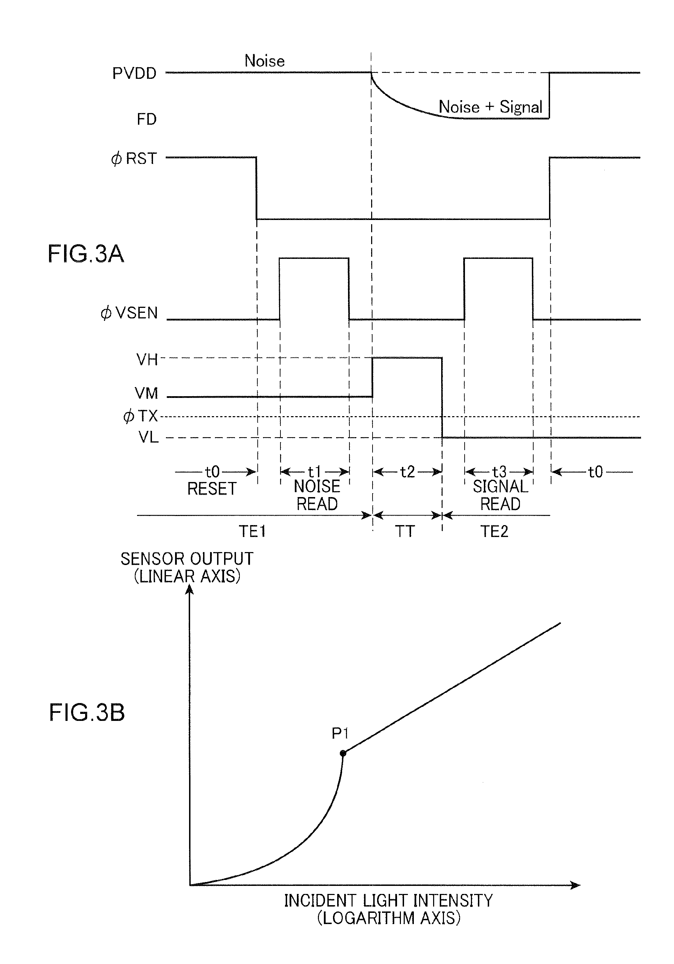

Fig. 3A shows the timing chart of the pixel circuit GC. As shown in Fig. 3A, the pixel circuit GC undergoes four periods cyclically repeated like the reset period t0, the noise read period t1, the transfer period t2 (TT), and the signal read period t3, and outputs pixel signals.

Specifically, the reset period t0 corresponds to the period immediately after the termination of the signal read period t3 to immediately before the start of the noise read period t1. In other words, in the exposure period TE (TE1, TE2), almost the whole period except for the noise read period t1 and the signal read period t3 is the reset period t0.

In the reset period t0, φRST is set at Hi, so that the reset transistor RST is turned on; φVSEN is set at Lo, so that the row selection transistor SL is turned off; and φTX is set at the intermediate potential VM.

In other words, in the reset period t0, the reset transistor RST resets FD, so that the level of FD is at PVDD. As a result, φTX is set at the intermediate potential VM, and hence the signal charges leaking from the photoelectric conversion element PD to FD are discharged from FD.

In the noise read period t1, φRST is set at Lo, φVSEN is set at Hi, and φTX is set at the intermediate potential VM; thus, the reset transistor RST is turned off, the row selection transistor SL is turned on, and the transfer transistor TX is driven with the intermediate potential VM.

As a result, the voltage signal at the reset level of FD is read by the amplification transistor SF and the row selection transistor SL, and is outputted to the column ADC at the corresponding column as a noise signal. The noise signal includes a kTC noise mainly generated upon resetting of FD, and varies from one pixel circuit GC to another.

Herein, in the noise read period t1, the voltage signal at the reset level of FD is read by the reset transistor RST with FD not reset. For this reason, the voltage signal at the reset level of FD varying from one pixel circuit GC to another can be outputted as a noise signal with precision.

In the transfer period t2, φRST is set at Lo, φVSEN is set at Lo, and φTX is set at VH, the reset transistor RST is turned off, the row selection transistor SL is turned off, and the transfer transistor is turned on. As a result, the gate of the transfer transistor TX is fully opened, so that the signal charges accumulated in the photoelectric conversion element PD in the exposure period TE1 are transferred to FD. As a result, the voltage of FD is decreased according to the signal charges.

Upon termination of the transfer period t2, φTX is set at the bias voltage VL, the gate of the transfer transistor TX is closed, exposure of the next frame by the photoelectric conversion element PD is started, and the exposure period TE2 is started.

In the signal read period t3, φRST is set at Lo, φVSEN is set at Hi, and φTX is set at the bias voltage VL; thus, FD converts signal charges into voltage signals, and the converted voltage signals are read by the amplification transistor SF and the row selection transistor SL, and outputted as a noise + video signal to the column ADC of the corresponding column.

Incidentally, the column ADC described later calculates the difference between the noise signals read in the noise read period t1 and the noise + video signals read in the signal read period t3 by correlated double sampling, and removes the noise components included in the noise + video signals, there by to extract video signals.

Then, upon termination of the signal read period t3, φRST is set at Hi again, so that FD is reset, and the voltage of FD is set at PVDD. Thus, the next reset period t0 is started.

Fig. 3B is a graph showing the photoelectric conversion characteristic of the pixel circuit GC driven according to the timing chart of Fig. 3A. In Fig. 3B, the ordinate axis is a linear axis, and denotes the video signals outputted from the pixel circuits GC, and the abscissa axis is a logarithmic axis, and denotes the incident light intensity upon the photoelectric conversion element PD.

As indicated from the graph, with the knee point P1 as the boundary, the linear characteristic is observed in the lower brightness region, and the log (logarithmic) characteristic is observed in a higher brightness region. Incidentally, in the graph of Fig. 3B, the linear characteristic moves up in a curve, and the log characteristic moves up almost linearly. This is because the abscissa axis is the logarithm axis.

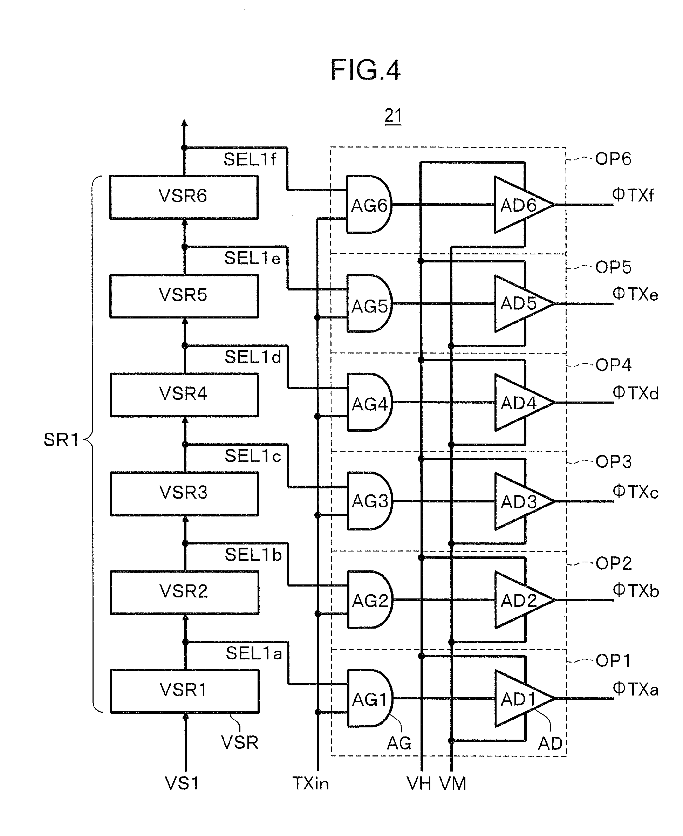

Fig. 4 shows the circuit diagram of the vertical scanning part 21 when a circuit of a comparative example is adopted as the vertical scanning part 21 shown in Fig. 1. Incidentally, Fig. 4 shows the circuit diagram in the case where the number of rows of the pixel array part 1 is 6. Specifically, the circuit groups of respective rows of the first to sixth rows from the bottom shown in Fig. 4 correspond to the first to sixth rows from the bottom of the pixel array part 1 shown in Fig. 1, respectively.

The vertical scanning part 21 shown in Fig. 4 includes six output parts OP1 to OP6 corresponding to respective rows of the pixel array part 1, and a shift register SR1 (one example of a first shift register). The shift register SR1 cyclically selects respective rows of the pixel array part 1 each in a prescribed H period, and outputs first selection signals (Hi SEL1a to SEL1f) to the output parts OP1 to OP6 corresponding to the selected rows, respectively.

The output parts OP1 to OP6 each include an AND gate AG and an analog driver AD. Incidentally, when the AND gates AG of respective rows are distinguished, the AND gates AG corresponding to the first to sixth rows are described as AND gates AG1 to AG6, respectively. Whereas, when the analog drivers AD of respective rows are distinguished, the analog drivers AD corresponding to the first to sixth rows are described as analog drivers AD1 to AD6, respectively.

The shift register SR1 is a 6-bit shift register including six latch parts VSR corresponding to respective rows of the pixel array part 1. Incidentally, when the latch parts VSR of respective rows are distinguished, the latch parts VSR at the first to sixth rows are described as latch parts VSR1 to VSR6, respectively.

The latch parts VSR1 to VSR6 are connected to the input terminals of the AND gates AG1 to AG6 at the output terminals thereof, respectively. The latch part VSR1 receives a pulse signal VS1 for causing the shift register SR1 to start operating. The pulse signal VS1 is in synchronization with a vertical synchronization signal, and rises, for example, after an elapse of a prescribed period from rising of the vertical synchronization signal, and is outputted from, for example, the timing generator 22 shown in Fig. 1.

Herein, the vertical synchronization signal is a signal for the pixel array part 1 to prescribe the read start timing of pixel signals for one frame. Whereas, one frame denotes the image data formed of pixel signals read by all the pixel circuits GC in N rows and M columns forming the pixel array part 1, in other words, one sheet of image data.

The latch part VSR1 makes SELla which is an output signal Hi when the pulse signal VS1 goes Hi, and outputs a first selection signal to the next-stage latch part VSR2 and the AND gate AG1. Then, the latch part VSR1 makes SEL1a Lo upon an elapse of a prescribed H period, and terminates outputting of the first selection signal.

The latch part VSR2 makes SEL1b which is an output signal Hi when SEL1 a goes Lo, and outputs the first selection signal to the latch part VSR3 and the AND gate AG2. Then, the latch part VSR2 makes SEL1b Lo upon an elapse of the H period, and terminates outputting of the first selection signal.

In this manner, the shift register SR1 successively shifts the first selection signal on the H period basis toward the latch parts VSR1 to VSR6. Then, upon an elapse of the 6H period, the shift register SR1 receives a pulse signal VS1 at the latch part VSR1 again, and successively shifts the first selection signal on the H period basis toward the latch parts VSR1 to VSR6.

The AND gates AG1 to AG6 receives SEL1a to SEL1f at respective one input terminals thereof, respectively, and receives TXin at respective other input terminals thereof. Herein, TXin is a signal which is outputted from, for example, the timing generator 22, is the source for φTXa to φTXf, and has a cycle of the H period, and rises in synchronization with each rising of SELla to SEL1f. Then, the AND gate AG performs an AND operation of SEL1x (x = a to f) and TXin, and outputs a Hi or Lo signal to the analog driver AD at the corresponding row.

The analog driver AD is connected with the output terminal of the AND gate AG at the corresponding row. Further, the analog driver AD receives an ON voltage VH and an intermediate potential VM. Then, when the analog driver AD receives a Hi signal from the AND gate AG, it outputs an ON voltage VH. When the analog driver AD receives a Lo signal from the AND gate AG, it outputs the intermediate potential VM. Incidentally, the ON voltage VH and the intermediate potential VM are outputted from the DAC 23.

Further, the analog driver AD is connected with the pixel circuits GC at each row of the pixel array part 1 of the corresponding row. For example, when the analog driver AD 1 receives a Hi signal from the AND gate AG 1, it outputs the ON voltage VH to the gate of each transfer transistor TX of M pixel circuits GC at the first row of the pixel array part 1. When the analog driver AD1 receives a Lo signal from the AND gate AG1, it outputs the intermediate potential VM to the gate of each transfer transistor TX of M pixel circuits GC at the first row of the pixel array part 1.

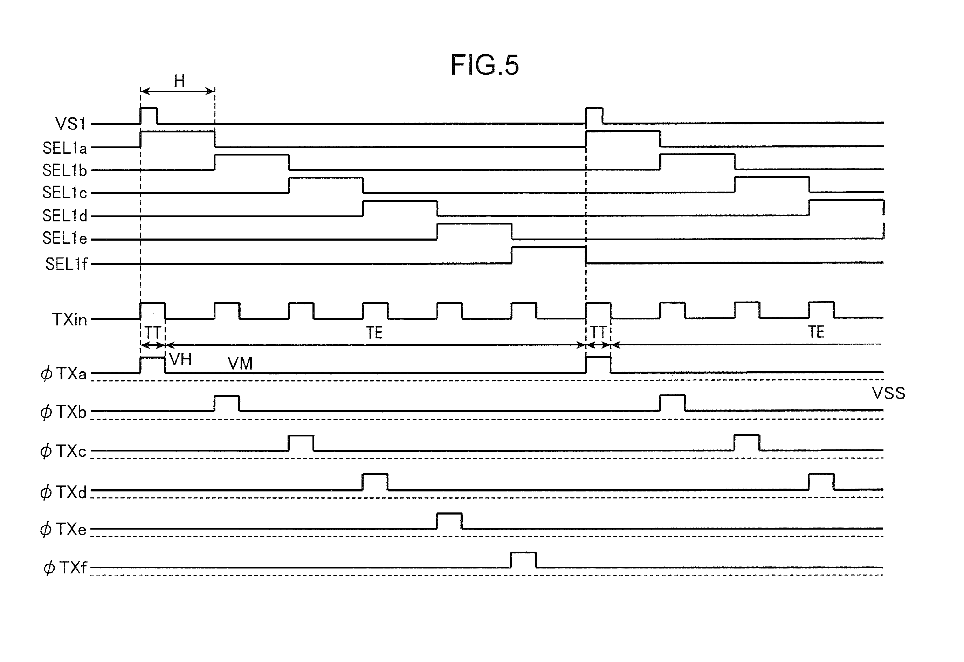

Fig. 5 is a timing chart showing the operation of the vertical scanning part 21 shown in Fig. 4. The pulse signal VS1 is inputted to the latch part VSR1 every 6H period.

The shift register SR1 successively makes SEL1a to SEL1f Hi on the H period basis.

φTXa becomes from VM to VH when SEL1a goes Hi, so that the ON voltage VH is outputted to the gate of each transfer transistor TX of the pixel circuits GC at the first row. As a result, the transfer period TT for the pixel circuits GC at the first row starts. When φTXa becomes VM according to Lo of TXin, the transfer period TT terminates, resulting in the exposure period TE. Thus, the transfer transistor TX of each pixel circuit GC at the first row is driven by the intermediate potential VM. As a result, the pixel circuits GC at the first row can accumulate signal charges with the linear log characteristic.

φTXb becomes from VM to VH when SEL1b goes Hi, so that the ON voltage VH is outputted to the gate of each transfer transistor TX of the pixel circuits GC at the second row. As a result, the transfer period TT for the pixel circuits GC at the second row starts. When φTXb becomes VM according to Lo of TXin, the transfer period TT terminates, resulting in the exposure period TE. Thus, the transfer transistor TX of each pixel circuit GC at the second row is driven by the intermediate potential VM. As a result, the pixel circuits GC at the second row can accumulate signal charges with the linear log characteristic.

Hereafter, φTXc to φTXf successively become VH according to Hi of SEL1c to SEL1f, so that the transfer period of the pixel circuits GC at third to sixth rows is started.

Further, φTXc to φTXf successively become VM according to Lo of TXin, so that the transfer transistors TX of the pixel circuits GC at the third to sixth rows are driven by the intermediate potential VM. This results in that the pixel circuits GC at the third to sixth rows have the linear log characteristic.

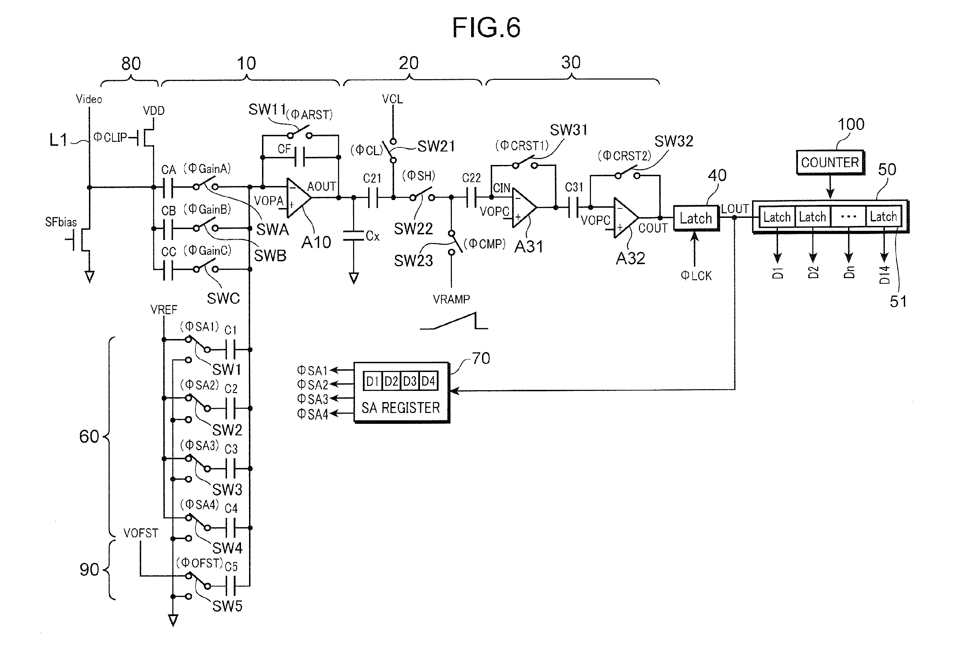

Fig. 6 is a circuit diagram of one column ADC forming the column ADC array part 3 shown in Fig. 1. The column ADC includes a column amplifier 10, a clamp part 20, a comparator part 30, a LCK latch circuit 40, a latch part 50, a sequential comparison signal generation part 60, a SA register 70, a noise level restriction transistor 80, and a dark current removing part 90.

In Fig. 6, φGainA, φGainB, φGainC, φARST, φCL, φSH, φCMP, φCRST1, φCRST2 show control signals, and are outputted from, for example, the timing generator 22. Whereas, VRAMP shows a ramp signal, and is outputted from the ramp generator 7.

The column amplifier 10 performs an amplification processing on a pixel signal Video outputted from the pixel array part 1, while performing a correlated double sampling processing, thereby to remove a noise signal from the pixel signal Video.

Specifically, the column amplifier 10 includes an operational amplifier A10, capacitors CA, CB, CC, and CF, and switches SWA, SWB, SWC, and SW11. The capacitors CA, CB, and CC are connected to the minus terminal side of the operational amplifier A10 via the switches SWA, SWB, and SWC, respectively. The capacitor CF is a feedback capacitor disposed between the input/output terminals of the operational amplifier A10.

The switch SWA is a switch for connecting the capacitor CA to the operational amplifier A10. For example, when φGainA = Hi, the switch SWA is turned on, and connects the capacitor CA to the minus terminal of the operational amplifier A10. When φGainA = Lo (low level), the switch SWA is turned off, and disconnects the capacitor CA from the minus terminal of the operational amplifier A10. The switches SWB and SWC are also switches for connecting the capacitors CB and CC to the operational amplifier A10, respectively, as with the switch SWA.

The switch SW11 is connected in parallel with the capacitor CF. The switch SW11 is turned on when φARST = Hi, and is turned off when φARST = Lo. Thus, the switch SW11 resets the column amplifier 10, and sets the potential of the minus terminal of the operational amplifier A10 and the output terminal of the operational amplifier A10 at a prescribed reset level (which will be hereinafter described as "VOPA"). Incidentally, the plus terminal of the operational amplifier A10 is constantly applied with VOPA.

Herein, the column amplifier 10 amplifies an input signal with a gain of CA/CF when switch SWA= ON; amplifies an input signal with a gain of CB/CF when switch SWB = ON; amplifies an input signal with a gain of CC/CF when switch SWC = ON; and amplifies an input signal with a gain of (CA+CB+CC)/CF when switches SWA, SWB, and SWC = ON.

The clamp part 20 is disposed on the output terminal side of the column amplifier 10, and clamps the black level of AOUT which is a signal outputted from the column amplifier 10 to a clamp voltage VCL which is a prescribed constant voltage. Herein, the clamp part 20 includes switches SW21 and SW22, and capacitors C21 and C22. The switch SW21 is grounded via the capacitors C21 and Cx, and is connected to the output terminal of the operational amplifier A10 via the capacitor C21 at one end thereof, and is connected to a clamp voltage source (not shown) for outputting a clamp voltage VCL at the other end thereof. Thus, the switch SW21 is turned on when φCL = Hi, and is turned off when φCL = Lo.

The switch SW22 is connected to the capacitor C21 at one end thereof, and is connected via the capacitor C22 to the comparator part 30 at the other end thereof. The switch SW22 is turned on when φSH = Hi, and establishes a connection between the column amplifier 10 and the comparator part 30, and is turned off when φSH = Lo, and cuts off between the column amplifier 10 and the comparator part 30.

The capacitor Cx is connected to the capacitor C21 at one end thereof, and is grounded at the other end thereof, and holds AOUT.

The comparator part 30 includes switches SW31 and SW32, a capacitor C31, and comparators A31 and A32.

The switch SW23 is connected via the capacitor C22 to the minus terminal of the comparator A31, and receives VRAMP at the other end thereof. The switch SW23 is turned on when φCMP = Hi, and inputs VRAMP to the minus terminal of the comparator A31; and is turned off when φCMP = Lo, and does not input VRAMP to the minus terminal of the comparator A31.

In the present embodiment, the video signal is divided into the upper-order bit group of the upper-order 4 bits and the lower-order bit group of the lower-order 10 bits, which are AD converted. Then, the column ADC AD converts the upper-order bit group by a sequential comparison type AD conversion system, and AD converts the lower-order bit group by an integration type AD conversion system.

For this reason, as VRAMP, in order to AD convert the lower-order bit group, there is adopted, for example, a ramp signal increasing linearly with time within the range of 0 to 1023 (=2¹⁰).

The switch SW31 is connected between the input/output terminals of the comparator A31, and is turned on when φCRST1 = Hi, and is turned off when φCRST1 = Lo. Thus, the switch SW31 resets the comparator A31, and sets the potential of the minus terminal of the comparator A31 and the output terminal of the comparator A31 at a prescribed reset level (which will be hereinafter described as "VOPC"). Incidentally, the plus terminal of the comparator A31 is constantly applied with VOPC.

The comparator A31 compares the signal inputted to the minus terminal (which will be hereinafter described as "CIN") with VOPC. The comparator A31 inverts the output signal to a low level when CIN exceeds VOPC, and inverts the output signal to a high level when CIN is less than VOPC.

The switch SW32 is connected between the input/output terminals of the comparator A32. The switch SW32 is turned on when φCRST2 = Hi, and is turned off when φCRST2 = Lo. Thus, the switch SW32 resets the comparator A32, and sets the potential of the minus terminal of the comparator A32 and the output terminal of the comparator A32 to VOPC which is a reset level. Incidentally, the plus terminal of the comparator A32 is constantly applied with VOPC.

The comparator A32 is connected via the capacitor C31 to the comparator A31 at the minus terminal thereof. When the output signal from the comparator A31 exceeds VOPC, the output signal (which will be hereinafter described as "COUT") is inverted to Lo. When the output signal from the comparator A31 is lower than VOPC, COUT is inverted to Hi.

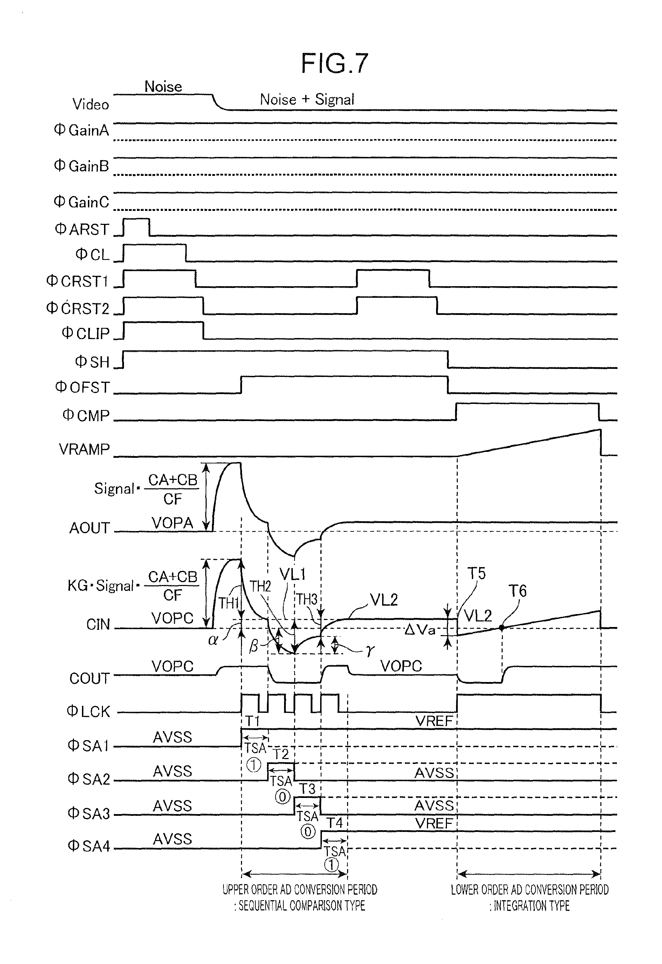

The LCK latch circuit 40 is a 1-bit latch circuit for determining the bit values (= D1 to D4) of the upper-order bit group. Specifically, the LCK latch circuit 40 receives, as shown in Fig. 7, φLCK shorter in Hi period than TSA which is the period for determining one bit value of the upper-order bit group, and detects whether COUT is inverted or not during the period in which φLCK is Hi. When COUT is inverted, the currently latched value is inverted. When COUT is not inverted, the currently latched value is not inverted. Then, when φLCK switches to, for example, Lo, the LCK latch circuit 40 outputs the currently latched bit value as LOUT, and causes the latch circuit 51 of the corresponding bit of the subsequent stage to latch it.

For example, the LCK latch circuit 40 latches a value of 1 by default. In the first TSA for determining D1, when COUT is not inverted, the LCK latch circuit 40 causes the latch circuit 51 for D1 to latch 1. When COUT is inverted, the LCK latch circuit 40 causes the latch circuit 51 for D1 to latch 0.

Further, in the second TSA for determining D2, when COUT is not inverted, if the LCK latch circuit 40 latches a value of 1, it causes the latch circuit 51 for D2 to latch 1; alternatively, if the LCK latch circuit 40 latches a value of 0, it causes the latch circuit 51 for D2 to latch 0.

On the other hand, in the second TSA, when COUT is inverted, if the LCK latch circuit 40 latches a value of 1, it latches 0 by inverting 1, and causes the latch circuit 51 for D2 to latch 0; alternatively, if the LCK latch circuit 40 latches a value of 0, it latches 1 by inverting 0, and causes the latch circuit 51 for D2 to latch 1. In the same manner for D3 and D4, the LCK latch circuit 40 determines the values of bits.

Then, the reason why the LCK latch circuit 40 is disposed will be described. When the LCK latch circuit 40 is not disposed, the defective condition described below occurs.

The D1 to D4 which are the values of the upper-order bits are determined by a sequential comparison type. When the relation in level between CIN and VOPC inputted to the comparator part 30 is subtle, there may occur the situation such that COUT changes in the end of TSA.

The capacitance load between the output terminal of the comparator A32 and the latch part 50 is not equal to the capacitance load between the output terminal of the comparator A32 and the SA register 70. In Fig. 6, the wiring length between the output terminal of the comparator A32 and the SA register 70 is longer than the wiring length between the output terminal of the comparator A32 and the latch part 50. For this reason, the capacitance load is large, and the propagation delay amount is also large.

If COUT is inverted from Hi to Lo immediately before the termination of TSA, without the LCK latch circuit 40, the capacitance load between the comparator A32 and the latch part 50 is smaller than the capacitance load between the comparator A32 and the SA register 70. Accordingly, the inversion of COUT is propagated to the latch part 50, but the inversion of COUT is not propagated to the SA register 70.

As a result, for example, there occurs the situation in which 0 is latched at D 1 of the latch part 50, but 1 is latched at D1 of the SA register 70. Thus, the SA register 70 and the latch part 50 are essentially required to latch the same value, but latch different values.

The data outputted as the pixel signal to the outside is the data latched by the latch part 50. Accordingly, in the above-described case, 0 is outputted. However, 1 is latched by the SA register 70. For this reason, in the column ADC inside, the data is processed as 1, and the capacitors C1 to C4 to be connected to the column amplifier 10 are determined. However, as the pixel signal, 0 is outputted. Therefore, a black point noise may be observed in the output image. In other words, in the situation in which 1 should be essentially outputted, 0 is outputted. Accordingly, a so-called black point noise which is darker than therearound, and small may occur in the output image.

Whereas, conversely to the foregoing case, if, in the end of TSA, COUT is inverted from Lo to Hi, and 0 is latched at the SA register 70, and 1 is latched at the latch part 50, a so-called white point noise which is brighter than therearound, and small is observed in the output image.

Under such circumstances, in order to solve the problems, the LCK latch circuit 40 becomes necessary. Namely, the LCK latch circuit 40 is driven by φLCK. As shown in Fig. 7, φLCK is a pulse signal slightly shorter in Hi period than TSA. For this reason, the inversion of COUT immediately before the termination of TSA is not propagated to the SA register 70 and the latch part 50. This enables the latch part 50 and the SA register 70 to latch the same value. As a result, it is possible to prevent the black point noise and the white point noise from appearing in the output image.

The latch part 50 includes 14 latch circuits 51 for latching the values of bits of the upper-order bit group (= D1 to D4) and the values of respective bits of the lower-order bit group (= D5 to D14).

A counter 100 is formed of, for example, a 10-bit counter disposed in the timing generator 22 shown in Fig. 1, and counts the time from the start of input of VRAMP to the comparator part 30 until CIN reaches VOPC, and COUT is inverted, and causes 10 latch circuits 51 latching data as D5 to D14 to latch the count value.

The sequential comparison signal generation part 60 includes capacitors C1 to C4 as sequential comparison capacitors, and switches SW1 to SW4. The capacitors C1 to C4 correspond to respective bits of the upper-order bit group, and respectively output signals having different levels to the column amplifier 10. Specifically, the capacitors C1 to C4 are connected to a voltage source (not shown) for outputting a reference voltage (which will be hereinafter described as "VREF") at respective one ends thereof via the switches SW1 to SW4, respectively, and are connected to the minus terminal of the operational amplifier A10 at respective other ends thereof.

In the present embodiment, the capacitors C1 to C4 correspond to D1 to D4, respectively, where D1 to D4 are respective bits of the upper-order bit group sequentially from the uppermost bit.

Herein, when the dynamic range of KG·Signal·((CA+CB+CC)/CF) is assumed to be W (provided that KG = C21/(C21+C22)), the capacitances of the capacitors C1 to C4 are set so as to achieve, for example, KG·(C1/CF)·VREF = W/2, KG·(C2/CF)·VREF = W/4, KG·(C3/CF)·VREF = W/8, and KG·(C4/CF)·VREF = W/16, respectively. Then, when the threshold values determining whether D 1 to D4 are each 1 or 0 are assumed to be TH1 to TH4, respectively, it results that TH1 = W/2, TH2 = W/4, TH3 = W/8, and TH4 = W/16.

The switches SW1 to SW4 are turned on when φSA1 to φSA4 = Hi, respectively, and connect C1 to C4 to VREF. The switches SW1 to SW4 are turned off when φSA1 to φSA4 = Lo, respectively, and connect C1 to C4 to a grounding terminal. Herein, φSA1 to φSA4 are outputted from the SA register 70.

The SA register 70 sequentially switches the connection relation between the capacitors C1 to C4 and the column amplifier 10, and determines the values (D1 to D4) of the upper-order bits of the video signal by a sequential comparison type AD conversion system based on LOUT outputted from the comparator part 30.

Herein, the SA register 70 sequentially connects the capacitors C 1 to C4 to the column amplifier 10 in decreasing order of the capacitance. Then, the SA register 70 determines whether or not, based on the occurrence or non-occurrence of inversion of LOUT upon connection of one capacitor of the capacitors C 1 to C4 to the column amplifier 10, the connection of the one capacitor to the column amplifier 10 is kept. In addition, the SA register 70 determines the value of bit corresponding to the one capacitor.

Specifically, the SA register 70 connects the capacitor C1 to the column amplifier 10. When LOUT is not inverted, the SA register 70 latches D1=1, and keeps φSA1= Hi. On the other hand, the SA register 70 connects the capacitor C1 to the column amplifier 10. When LOUT is inverted, the SA register 70 latches D1 = 0, and achieves switching to φSA1 = Lo.

Then, the SA register 70 sequentially connects the capacitors C2 to C4 to the column amplifier 10. When LOUT upon connection of a certain one capacitor is inverted, the SA register 70 latches the value of the bit corresponding to the one capacitor as the opposite value to the value of the higher-order bit by one digit. In addition, when the SA register 70 latches 1 as the bit corresponding to the one capacitor, it keeps the connection of the one capacitor to the column amplifier 10. When the SA register 70 latches 0 as the bit corresponding to the one capacitor, it cuts off the connection of the one capacitor to the column amplifier 10.

In other words, the SA register 70 operates in the same way as the LCK latch circuit 40, and turns on/off the switches SW1 to SW4 according to the latching values of D1 to D4, respectively.

The noise level restriction transistor 80 is formed of, for example, an n channel type MOS transistor receiving φCLIP which is a driving signal at the gate thereof, receiving VDD at the drain thereof, and connected to the input side of the column amplifier 10 at the source thereof. Then, the noise level restriction transistor 80 is, as shown in Fig. 7, driven by φCLIP set at the intermediate potential in the noise read period, and suppresses the white black reversal phenomenon caused when a super high brightness object is exposed.

Herein, the white black reversal phenomenon is the following phenomenon: when a super high brightness object is exposed, FD fails to be reset, resulting in the reduction of the level of the noise signal which ought to be naturally at a high potential; this results in the reduction of video signals obtained by a correlated double sampling processing, thereby darkly reproducing the super high brightness object which ought to be reproduced brightly.

In the noise read period, even thought the transfer transistor TX is driven by the intermediate potential VM, the photoelectric conversion element PD continues exposure. For this reason, when a super high brightness object is exposed, signal charges from the photoelectric conversion element PD flow into FD. In this case, the level of the noise signal read in the noise read period becomes largely lower than the expected level. Accordingly, when a correlated double sampling processing is performed using the noise signal reduced in level, the super high brightness object is reproduced darkly, resulting in the occurrence of the white black reversal phenomenon.

Herein, φCLIP is outputted from the timing generator 22, does not become completely Hi, and drives the noise level restriction transistor 80 with the intermediate potential determined according to the set value previously stored in the timing generator 22. Incidentally, φCLIP is generated by the conversion of the set value stored in the register of the timing generator 22 shown in Fig. 1 into an analog signal by the DAC 23.

When φCL1P becomes completely Hi, the noise signal becomes at a level of VDD. Accordingly, the noise signal is read with no consideration given to the reset level of FD at all. This makes it impossible for the column amplifier 10 to perform correlated double sampling. Thus, by setting the pulse height of φCLIP at the intermediate potential lower than the Hi level, it becomes possible to input a noise signal FD with consideration given to the reset level to the column amplifier 10.

Herein, the pulse height of φCLIP is set at a preset level such that a high-level noise signal outputted from the pixel circuit GC when an object within such a normal brightness range as not to cause the white black reversal phenomenon is exposed is not reset by the noise level restriction transistor 80, and such that a low-level noise signal outputted from the pixel circuit GC when a super high brightness object causing the white black reversal phenomenon is exposed, is reset by the noise level restriction transistor 80. In other words, when the level of a noise signal is equal to or higher than a given value, the noise signal is inputted as it is to the column amplifier 10; whereas, when the level of a noise signal is equal to or lower than a given level, the noise signal is raised in level by the noise level restriction transistor 80, and is inputted to the column amplifier 10.

As a result, without using a noise signal reduced for super high brightness, a high-potential noise signal raised to a given value by the noise level restriction transistor 80 is used. For this reason, it is possible to suppress the white black reversal caused by the correlated double sampling processing.

Incidentally, it may be configured so as to implement the following: a plurality of set values are prepared; thus, the intermediate potential for driving the noise level restriction transistor 80 can be appropriately selected so that a proper set value is selected from a plurality of the set values according to, for example, the brightness of the object.

The dark current removing part 90 inputs an offset signal for removing a dark current component included in a noise + video signal to the column amplifier 10 in the signal read period. Herein, the dark current removing part 90 includes a switch SW5 and a capacitor C5. The switch SW5 receives VOFST which is a control signal for generating an offset signal at one end thereof, and is connected to the minus terminal of the operational amplifier A10 via the capacitor C5 at the other end thereof.

Herein, VOFST is generated by conversion of the set value set by the timing generator 22 into an analog signal by the DAC 23. Whereas, φOFST is outputted to the column ADC via the DAC 23 under control of the timing generator 22.

At the dark time during which the pixel array part 1 is exposed to light from a dark object, when the environmental temperature of the pixel array part 1 is low, and the dark current is negligibly little in amount, the voltage of FD changes as indicated with the dotted line of Fig. 3A. In this case, the level of the noise + video signal becomes equal to the level of the noise signal. When correlated double sampling is performed at the column ADC, thereby to remove noise components, data indicative of a dark object such as 0 is outputted from the column ADC. Thus, there is no problem.

However, at the dark time, when the environmental temperature of the pixel array part 1 is high, and the dark current is unnegligibly much in amount, the voltage of FD changes as indicated with the solid line of Fig. 3A regardless of the dark time.

Herein, the level of the noise signal is the voltage level at the time of reset. For this reason, the value is determined independently of the dark current. However, the noise + video signal includes a dark current component. As a result, regardless of the dark time, the noise + video signal becomes at a lower level than that of the noise signal. Accordingly, when correlated double sampling is performed by the column ADC, due to the dark current component included in the noise + video signal, the data according to the dark current component is outputted from the column ADC regardless of the dark time. In other words, data appearing as if it is outputted upon exposing a bright object is outputted from the column ADC.

Thus, before execution of the correlated double sampling processing at the dark current removing part 90, the dark current component is subtracted from the noise + video signal. Accordingly, even when the dark current component increases, such data as to be outputted upon exposing a bright object at the dark time is prevented from being outputted from the column ADC.

As shown in Fig. 7, φOFST goes Hi in the period from the start time of the upper-order A/D conversion period to the time T5 at which input of VRAMP is started in the signal read period (Noise + Signal).

When φOFST goes Hi, the switch SW5 is turned on. Accordingly, the minus terminal of the operational amplifier A10 increases in potential by VOFST·(C5/CF). When the minus terminal of the operational amplifier A10 increases in potential, AOUT which is the potential of the output terminal of the operational amplifier A10 decreases by VOFST·(C5/CF).

The operation of the dark current removing part 90 will be briefly described. It can be said to be the operation of constantly depressing AOUT in the period in which φOFST is Hi, and removing the dark current component from AOUT.

Thus, it becomes possible that the dark current component is removed from the noise + video signal by VOFST and C5 and CF. Herein, the dark current removing part 90 is connected to the input side of the column amplifier 10, and performs a processing on the noise + video signal in an analog state before subjected to A/D conversion. For this reason, even when the dark current component is present for 0.2 V as described above, by adjusting VOFST so that the dark current component for 0.2 V is offset from the noise + video signal, it is possible to resolve the loss for 0.2 V of the input range of the pixel signal.

Incidentally, the timing generator 22 may determine the set value for prescribing VOFST according to the temperature data detected by the temperature sensor 6. In this case, the value of VOFST corresponding to the value of the temperature data may be determined using the preset function for determining the relation between the temperature and VOFST. Further, the following is also acceptable: the timing generator 22 drives the dark current removing part 90, for example, only when the temperature the pixel array part 1 increases, and the effect of the dark current becomes unnegligible; in other cases, the timing generator 22 does not drive the dark current removing part 90.

Then, the operation of the column ADC shown in Fig. 6 will be described. Fig. 7 is a timing chart showing the operation of the column ADC. In the following timing chart, it is assumed that SWA and SWB are turned on, that the capacitors CA and CB are connected to the operational amplifier A10, and that the capacitor CC is not connected to the operational amplifier A 10.

First, to the vertical signal line L1, a noise signal Noise from the pixel circuit GC is outputted as a pixel signal Video. Then, φARST, φCL, φCRST1, φCRST2, φCLIP, and φSH are set at Hi in a given period, so that the column amplifier 10, the clamp part 20, and the comparator part 30 are reset.

Then, the noise signal Noise is sample-held by the capacitors CA and CB.

Then, a noise + video signal (Noise + Signal) is outputted as a pixel signal Video from the pixel array part 1 via the vertical signal line L1.

Herein, the noise + video signal is lower in potential than the noise signal by the video component included in the noise + video signal. Then, when the pixel signal Video is reduced by the video component, AOUT which is an output signal from the column amplifier 10 increases VOPA by the Signal·((CA+CB)/CF) according to the magnitude of the video component (Signal).

Whereas, the gain KG of the clamp part 20 is KG = C21/(C21+C22). For this reason, CIN increases from VOPC by KG·Signal·((CA+CB)/CF). At this time, at the comparator part 30, it results that CIN > VOPC, and hence COUT is inverted to Hi.

Then, it results that φSA1 = Hi, so that the column amplifier 10 is connected with the capacitor C1. Thus, as the potential inputted to the column amplifier 10, only VREF·C1 increases, and AOUT decreases by VREF·(C1/CF). Accordingly, CIN decreases by KG·VREF·(C1/CF) = TH1, to be at a level VL1 (period T1).

At this time, at the SA register 70, CIN > VOPC, so that COUT is not inverted. For this reason, φSA1 = Hi is kept, and D1 = 1 is latched (period T1). Namely, the SA register 70 compares the initial CIN (= KG·Signal·(CA+CB)/CF) and TH1 (= KG·VREF·(C1/CF)) which is the threshold value of D1. Thus, it results that CIN > TH1, and hence the SA register 70 holds φSA1 = Hi, and achieves D1 = 1.

Whereas, in the period in which φLCK is Hi in the period T1, the LCK latch circuit 40 latches 1 because CIN>VOPC, and COUT is not inverted. Then, the latch circuit 51 for D 1 latches 1 because the LCK latch circuit 40 latches 1. As a result, it is determined that D1 =1.

Then, in a state of φSA1 = Hi, it results that φSA2 = Hi, so that the column amplifier 10 is connected with the capacitor C2. As a result, CIN decreases from the level VL1 by KG·VREF·(C2/CF) = TH2, resulting in that CIN < VPOC. Thus, COUT is inverted from Hi to Lo. Accordingly, the SA register 70 returns the signal level to φSA2 = Lo, and disconnects the capacitor C2 from the column amplifier 10, and latches D2 = 0 (period T2).

Namely, the SA register 70 compares α (= initial CIN-TH1) obtained by subtracting TH1 from the initial CIN by the period T1 and TH2 (= KG·VREF·(C2/CF) which is the threshold value of D2, returns the signal level to φSA2 = Lo because initial CIN-TH1 < TH2, and hence latches D2 = 0.

Further, in the period in which φLCK is Hi in the period T2, the LCK latch circuit 40 latches D2 = 0 because it results that CIN < VOPC, so that COUT is inverted. Then, the latch circuit 51 for D2 latches 0 because the LCK latch circuit 40 latches 0. As a result, it is determined that D2 = 0.

Then, the SA register 70 achieves φSA3 = Hi in a state in which φSA1 = Hi, and φSA2 = Lo, and connects the capacitor C3 to the column amplifier 10. As a result, CIN increases to the level lower than the level VL1 by KG·VREF·(C3/CF) = TH3. However, CIN < VPOC, so that COUT is kept at Lo. Accordingly, the SA register 70 returns φSA3 to Lo, and latches D3 = 0 (period T3).

Namely, the SA register 70 compares β = TH2-(initial CIN-TH1) and γ (= TH2-TH3), indicating that TH2-(initial CIN-TH1) > TH2-TH3. This means that initial CIN-TH1 < TH3. Accordingly, the SA register 70 achieves D3 = 0, and returns the signal level to φSA3 = Lo. Incidentally, TH3 is the threshold value of D3, and TH3 = KG·VREF·(C3/CF).

Still further, in the period in which φLCK is Hi in the period T3, the LCK latch circuit 40 latches D3 = 0 because CIN < VOPC is kept, so that COUT is not inverted. Then, the latch circuit 51 for D3 latches 0 because the LCK latch circuit 40 latches 0. As a result, it is determined that D3 = 0.

Then, the SA register 70 achieves φSA4 = Hi in a state in which φSA1 = Hi, φSA2 = Lo, and φSA3 = Lo, and connects the capacitor C4 to the column amplifier 10. As a result, CIN increases to VL2 which is the level lower than the level VL1 by KG·VREF·(C4/CF). Accordingly, it results that CIN > VPOC, so that COUT is inverted from Lo to Hi. Accordingly, the SA register 70 holds φSA4 = Hi, and latches D4 = 1 (period T4).

Namely, the SA register 70 compares TH3-(initial CIN-TH1) and TH3-TH4, indicating that TH3-(initial CIN-TH1) < TH3-TH4. This means that initial CIN-TH1 > TH4. Accordingly, the SA register 70 achieves D4=1, and holds φSA4 = Hi. Incidentally, TH4 is the threshold value of D4, and TH4 = VREF·(C4/CF).

Whereas, in the period in which φLCK is Hi in the period T4, the LCK latch circuit 40 latches D4 = 1 because it results that CIN > VOPC, so that COUT is inverted. Then, the latch circuit 51 for D4 latches 1 because the LCK latch circuit 40 latches 1. As a result, it is determined that D4 = 1.

From the description up to this point, the AD conversion period of the upper-order bit group terminates, resulting in that D 1 to D4 = 1, 0, 0, and 1. At this point in time, CIN at a level of VL2 is held at the capacitor C22.

Then, φCRST1 and φCRST2 are rendered Hi for a given period, so that the comparators A31 and A32 are reset, resulting in that COUT = VOPC.

Then, it results that φSH = Lo, so that the comparator part 30 and the clamp part 20 are cut off from each other. It results that φCMP = Hi, so that VRAMP is inputted to the comparator part 30. As a result, VRAMP is superposed on CIN at the level VL2 held at the capacitor C22, so that CIN decreases from VL2 by level ΔVa according to the initial level of VRAMP (time T5). This results in that CIN < VOPC, so that COUT is inverted from VOPC to Lo. Whereas, at time T5, the counter 100 starts the count operation.

Then, when CIN exceeds the level of VOPC (time T6), COUT is inverted from Lo to Hi. Then, the counter 100 stops the count operation, and latches the count value at time T6 at the latch circuits 51 for D5 to D14. This determines the values of respective bits of the lower-order bit group.

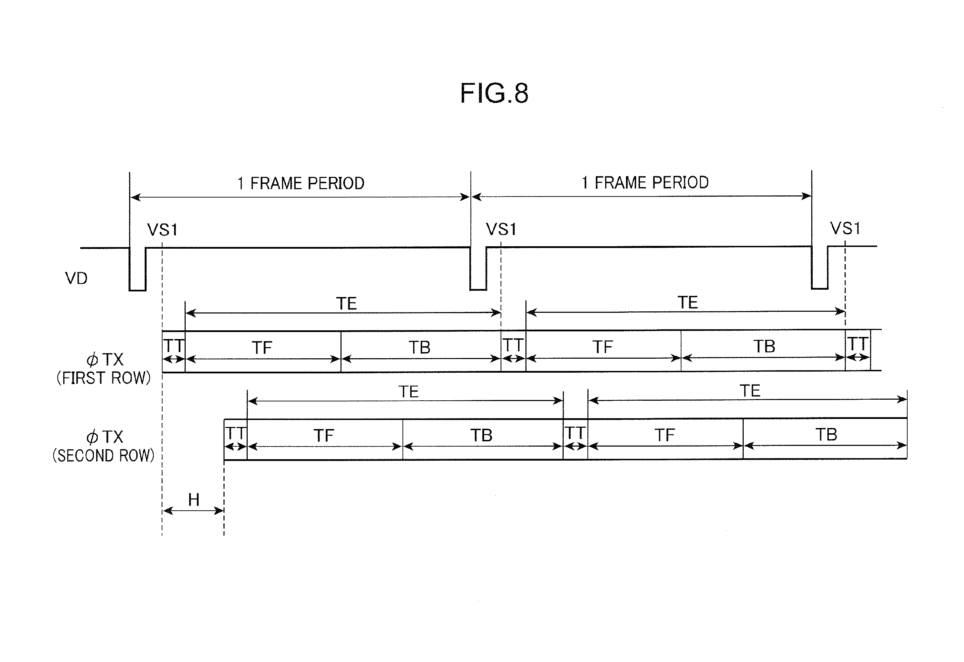

Fig. 8 is a timing chart showing the outline of the operation of the solid-state image capture device shown in Fig. 1. The VD shown in Fig. 8 is a vertical synchronization signal, and is a Lo active signal which goes Lo once in one frame period. Herein, one frame period is equal to N x H period where N represents the number of rows of the pixel array part 1.

The VS 1 marked on VD indicates the timing at which VS 1 shown in Fig. 10 rises to Hi. In the pixel circuits GC at the first row, when VS1 rises to Hi, the transfer period TT starts. The period upon termination of the transfer period TT until next rising of VS 1 to Hi is the exposure period TE. Hereafter, for the pixel circuits GC at the first row, the transfer period TT and the exposure period TE are repeated.

Further, upon an elapse of the H period after rising of VS1 to Hi, the transfer period TT for the pixel circuits GC at the second row is started. The period upon termination of the transfer period TT until the time at which the H period has elapsed after next rising of VS1 to Hi is the exposure period TE. Hereafter, for the pixel circuits GC at the second row, the transfer period TT and the exposure period TE are repeated.

Also for the pixel circuits GC at third and subsequent rows, following the pixel circuits GC at the second row, the transfer period TT and the exposure period TE are successively repeated.

Then, the exposure period TE for each row is divided into halves. In the first half period TF, the transfer transistor TX is applied with a negative bias voltage VL. In the latter half period TB, the transfer transistor TX is applied with the intermediate potential VM.

Incidentally, in Fig. 8, in the period between falling of VD and rising of VS1, for the pixel circuits GC at the first row, the reset period t0 and the noise read period t1 shown in Fig. 3 are assigned, FD is reset, and a noise signal is outputted to the column ADC.

Further, in the period from rising of VS 1 until the H period is elapsed, for the pixel circuits GC at the second row, the reset period t0 and the noise read period t1 shown in Fig. 3 are assigned, FD is reset, and a noise signal is outputted to the column ADC.

For the vertical scanning part 21 of the comparative example shown in Fig. 5, in the exposure period TE, the gate of the transfer transistor TX is constantly applied with the intermediate potential VM, so that the transfer gate is only half opened. On the other hand, as also described in Non-Patent Document (J. Hynecek, "Virtual Phase CCD Technology." IEDM Tech. Dig. 1979. pp 611), the following is known: in the CCD image sensor, by applying the transfer transistor with a negative bias, it is possible to reduce the dark current generated at the interface between the substrate layer and the insulation layer of the gate of the transfer transistor.

However, the CCD image sensor is entirely different in signal charge transfer technique from the CCD image sensor. For this reason, only by applying the technique performed for the CCD image sensor to the CMOS image sensor, it is difficult to implement both the reduction of the dark current generated at the transfer transistor TX and the expansion of the dynamic range.

Under such circumstances, in the present solid-state image capture device, in the first half period TF of the exposure period TE, the transfer transistor TX is driven by a negative bias voltage VL. As a result, the dark current generated at the interface between the substrate layer and the insulation layer at the underlying part of the gate of the transfer transistor TX is reduced. Further, with the present solid-state image capture device, in the latter half period TB of the exposure period TE, the transfer transistor TX is driven by the intermediate potential VM. As a result, the photoelectric conversion element PD is subjected to logarithm compression, thereby to implement a higher dynamic range. Thus, both of the reduction of the dark current and the expansion of the dynamic range are implemented.

As a result, it is possible to reduce the dark current generated at the transfer transistor TX according to the length of the first half period TF which is the period for applying the negative bias voltage VL in the exposure period TE. For example, when the length of the first half period TF is set at about 1/2 of that of the exposure period TE, the dark current can be made about 1/2.

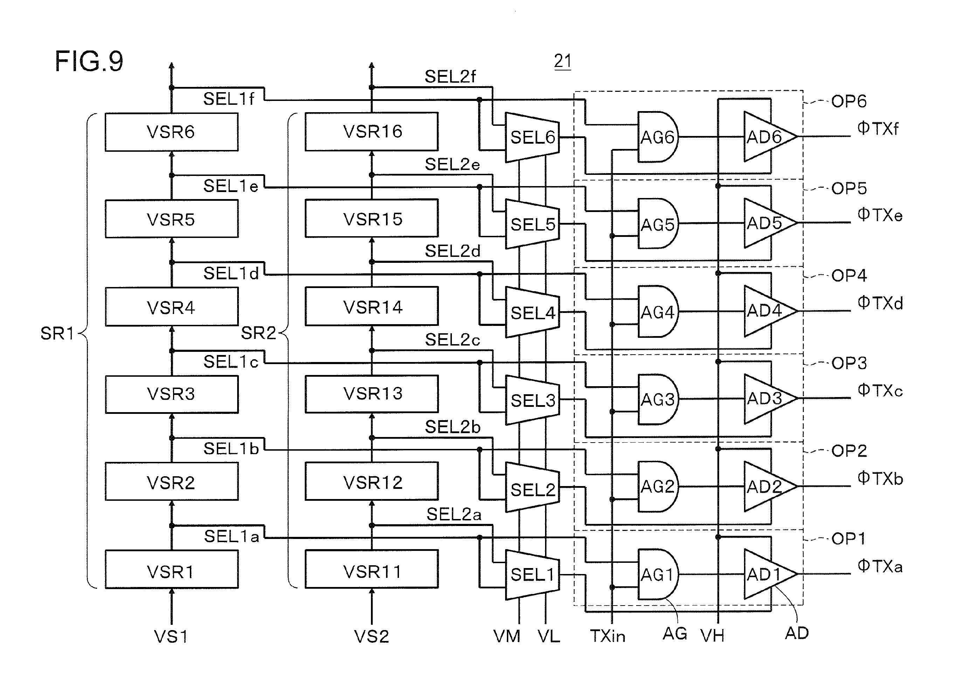

Fig. 9 shows a circuit diagram of the vertical scanning part 21 in accordance with the embodiment of the present invention. Fig. 10 shows a timing chart of the vertical scanning part 21 shown in Fig. 9. Incidentally, Fig. 10 shows a circuit diagram when the number of rows of the pixel array part 1 is 6. Specifically, the circuit groups of respective rows of the first to sixth rows from the bottom shown in Fig. 10 correspond to the first to sixth rows from the bottom of the pixel array part 1 shown in Fig. 1, respectively.

The vertical scanning part 21 shown in Fig. 9 further includes a shift register SR2 (one example of second shift register), and selectors SEL1 to SEL6 relative to the vertical scanning part 21 of the comparative example shown in Fig. 4. Incidentally, the portions overlapping those of Fig. 4 in Fig. 9 will not be described.

The shift register SR2 cyclically selects respective rows of the pixel array part 1 each for one H period after a delay of a prescribed period (e.g., 3H period) with respect to the shift register SR1, and outputs second selection signals (Hi SEL2a to SEL2f) to the selectors SEL1 to SEL6 and the output parts OP1 to OP6 of their corresponding selected rows, respectively.

The selectors SEL1 to SEL6 receive, for example, the bias voltage VL and the intermediate potential VM from the DAC 23. In the period between input of the first selection signal and input of the next second selection signal, the selectors SEL1 to SEL6 output the bias voltage VL to the output parts OP1 to OP6 of their respective corresponding rows, respectively. On the other hand, the selectors SEL1 to SEL6 output the intermediate potential VM to the output parts OP1 to OP6 of their respective corresponding rows, respectively, in the period between input of the second selection signals and input of the next first selection signals.

The output parts OP1 to OP6 output ON voltage VH to the gates of the transfer transistors TX of the pixel circuits GC of their respective corresponding rows, respectively, in a prescribed period shorter than the H period after input of the first selection signals. In other periods, the output parts OP1 to OP6 output the bias voltage VL or the intermediate potential VM outputted from the selectors SEL1 to SEL6 to their respective gates, respectively. Then, the output parts OP1 to OP6 each include an AND gate AG and an analog driver AD.

The AND gate AG of each row outputs a Hi signal to the analog driver AD of the corresponding row in a prescribed period from input of the first selection signal. Specifically, the AND gate AG of each row performs an AND operation of SEL1x (x = 1 to 6) and TXin, and outputs the logical product to the analog driver AD of the corresponding row. Herein, SEL1x indicates the signal outputted from the latch part VSR of a certain x-th row.

When the analog driver AD of each row receives a Hi signal from the AND gate AG of the corresponding row, it outputs On voltage VH to the gate of the transfer transistor TX of the pixel circuit GC of the corresponding row. On the other hand, when the analog driver AD of each row receives a Lo signal from the AND gate AG of the corresponding row, it outputs the bias voltage VL or the intermediate potential VM outputted from the selectors SEL1 to SEL6 of the corresponding row to the gate of the transfer transistor TX of the pixel circuit GC of the corresponding row.

The shift register SR2 is a 6-bit shift register including six latch parts VSR corresponding to respective rows of the pixel array part 1. Incidentally, when the latch parts VSR of respective rows are distinguished, the latch parts VSR at the first to sixth rows are described as latch parts VSR11 to VSR16, respectively.

The latch parts VSR11 to VSR16 are connected to the input terminals of the selectors SEL1 to SEL6 of the corresponding rows at the output terminals thereof, respectively. The latch part VSR11 receives a pulse signal VS2 for causing the shift register SR2 to start operating. The pulse signal VS2 is a signal rising, for example, after an elapse of the 3H period from the rising time of the pulse signal VS1, and is outputted from, for example, the timing generator 22 shown in Fig. 1.

Incidentally, by adjusting the rising timing of the pulse signal VS2, it is possible to adjust the lengths of the first half period TF and the latter half period TB. For example, when the pulse signal VS2 is risen after an elapse of n (n is an integer of 1 or more and 5 or less) x H period from the pulse signal VS1, the first half period TF can be adjusted to the period obtained by subtracting the transfer period TT from the n x H period. The latter half period TB can be adjusted to the 6H period -n x H period.

Then, the operation of the vertical scanning part 21 shown in Fig. 9 will be described by reference to Fig. 10. Incidentally, in Fig. 10, each circled figure represents what number H period this H period corresponds to based on the time at which the pulse signal VS1 has gone Hi. First, in the first H period, the pulse signal VS1 goes Hi, so that Hi SEL1a is outputted from the latch part VSR1, causing the first selection signal at the first row to be outputted.

Whereas, in the first H period, simultaneously with SEL1a going Hi, TXin goes Hi, so that the logical product of TXin and SEL1a becomes 1. Accordingly, the AND gate AG1 outputs a Hi signal to the analog driver AD1. The analog driver AD1 receives a Hi signal, resulting in that φTXa = VH, which starts the first-row transfer period TT. As a result, the transfer transistor TX of each pixel circuit GC of the first row is driven by On voltage VH, so that the gate is fully opened, causing the signal charges accumulated in the photoelectric conversion element PD to be transferred to FD.

Further, in the first H period, SEL1a= Hi, and SEL2a = Lo, so that the selector SEL1 outputs the bias voltage VL to the analog driver AD1.

Then, in the first H period, when TXin goes Lo, the logical product of TXin and SEL1a becomes 0. Accordingly, the AND gate AG1 outputs a Lo signal to the analog driver AD1. The analog driver AD1 receives a signal of Lo, and receives the bias voltage VL from the selector SEL1, resulting in that φTXa = VL. Thus, the transfer period TT of the first row terminates, and the first half period TF of the first row is started. As a result, the transfer transistor TX of the pixel circuit GC of the first row is driven by the bias voltage VL, so that the gate is closed, which starts exposure by the photoelectric conversion element PD.

In the second H period, it results that SEL1b = Hi. In the same manner as with the first row, it results that φTXb = VH, so that the transfer period TT of the second row is started. Further, in the second H period, when TXin = Lo, in the same manner as with the first row, it results that φTXb = VL. Accordingly, the transfer period TT of the second row terminates, and the first half period TF of the second row is started. As a result, the transfer transistor TX of the pixel circuit GC of the second row is driven by the bias voltage VL, so that the gate is closed, which starts exposure by the photoelectric conversion element PD.

Hereafter, in the third to sixth H periods, SEL1c to SEL1f successively go Hi. In the same manner as with the first and second rows, the transfer periods TT of the third to sixth rows are executed, and the first half periods TF of the third to sixth rows are started.

In the fourth H period, the pulse signal VS2 goes Hi, so that Hi SEL2a is outputted from the latch part VSR11, causing the second selection signal at the first row to be outputted.

Further, in the fourth H period, SEL2a = Hi, and SEL1a =Lo, so that the selector SEL1 outputs the intermediate potential VM to the analog driverAD1.

Then, in the fourth H period, SEL1a = Lo, and the logical product of TXin and SEL1a is 0, so that the AND gate AG1 outputs a Lo signal to the analog driver AD1. The analog driver AD1 receives a Lo signal, and receives the intermediate potential VM from the selector SEL1, resulting in that φTXa = VM. Thus, the first half period TF of the first row terminates, and the latter half period TB of the first row is started. As a result, the transfer transistor TX of the pixel circuit GC of the first row is driven by the intermediate potential VM. This causes the gate to be only half opened, resulting in continuation of exposure by the photoelectric conversion element PD.

In the fifth H period, SEL2b = Hi, and SEL1b = Lo. Accordingly, in the same manner as with the first row, the first half period TF of the second row terminates, and the latter half period TB of the second row is started.

Hereafter, in the sixth and the next first to third H periods, SEL2c to SEL2f successively go Hi. Thus, in the same manner as with the first and second rows, the latter half periods TB of the third to sixth rows are started.

When the next pulse signal VS1 goes Hi, the next first H period is started, resulting in that SEL1a = Hi, again. Thus, in the same manner as with the previous first H period, the transfer period TT of the first row is started. As a result, the latter half period TB of the first row terminates, and the transfer period TT of the first row is started.

Thus, in the present solid-state image capture device, upon termination of the transfer period TT, φTX is not set at the intermediate potential VM, but is set at the bias voltage VL. Herein, the bias voltage VL is a negative voltage. As a result, it is possible to suppress the dark current generated at the interface between the substrate layer made of Si and the insulation layer made of SiO₂ on the bottom side of the gate of the transfer transistor TX.

When the gate of the transfer transistor TX is applied with a negative bias voltage VL, holes are accumulated on the bottom side of the gate electrode. Accordingly, even when electrons are generated at the interface between the substrate layer and the insulation layer, the electrons recombine with holes to be eliminated. For this reason, it is possible to suppress the dark current.

However, when in the overall period of the exposure period TE, the bias voltage VL is adopted, the gate of the transfer transistor TX is fully closed. Accordingly, the pixel circuit GC is driven with a linear characteristic, which makes it impossible to expand the dynamic range.

On the other hand, with the present solid-state image capture device, as shown in Fig. 10, after the 3H period after the pulse signal VS1 goes Hi, the pulse signal VS2 goes Hi.

For this reason, after termination of the first half period TF, φTXa is set at VM, so that the transfer transistor TX of the first row is driven by the intermediate potential VM. As a result, as shown in Fig. 3B, the signal charges accumulated at the photoelectric conversion element PD are subjected to logarithm compression, which enables the pixel circuit GC to be driven with the linear log characteristic. Accordingly, it is possible to implement both of the reduction of the dark current and the expansion of the dynamic range.

Herein, in Fig. 10, in the period about half of the 6H period which is one frame period, the transfer transistor TX is driven with the bias voltage VL. For this reason, the dark current can be approximately halved as compared with the horizontal scanning circuit of the comparative example shown in Fig. 4.

Incidentally, in Fig. 10, switching is performed between the bias voltage VL and the intermediate potential VM every about half period, which is not exclusive.

Herein, in one frame period, the period during which the pixel circuit GC is driven with the linear log characteristic accounts for about 1/2, and is shorter than in the vertical scanning part 21 of the comparative example shown in Fig. 4. However, the pixel circuit GC shown in Fig. 2 is driven as shown in Fig. 3A, and hence ceases to show the integration property for light in the log region. As a result, even when the driving time with the linear log characteristic becomes 1/2, there is no problem at all.

For example, a consideration will be given to the case where the incident light quantity is small. In the first 1/2 period of the exposure period TE, the transfer transistor TX is driven with the bias voltage VL, so that the gate of the transfer transistor TX is closed. Accordingly, in the photoelectric conversion element PD, signal charges are accumulated with the linear characteristic.

In this case, even when the process goes to the latter 1/2 period of the exposure period TE, and the transfer transistor TX is driven by the intermediate potential VM, the incident light quantity is small. Accordingly, the signal charges do not leak from the photoelectric conversion element PD to FD. Therefore, the pixel circuit GC can output pixel signals with the linear characteristic upon termination of the exposure period TE when the incident light quantity is small.

Conversely, a consideration will be given to the case where the incident light quantity is large. In the first 1/2 period of the exposure period TE, the transfer transistor TX is driven with the bias voltage VL. Accordingly, the gate of the transfer transistor TX is closed. Therefore, signal charges are accumulated in the photoelectric conversion element PD with the linear characteristic. In some cases, in the first 1/2 period, it can be considered that the photoelectric conversion element PD may be saturated.

In this state, the process goes to the latter 1/2 period of the exposure period TE, so that the transfer transistor TX is driven with the intermediate potential VM, resulting in that the gate of the transfer transistor TX is half opened. Accordingly, the signal charges exceeding the potential of the gate in a half-opened state in the photoelectric conversion element PD are discharged to the FD side.

Then, an intense light is subsequently made incident thereupon. Then, since the gate is in a half-opened state, the signal charges are subjected to logarithm compression, and shows the linear log characteristic.

Thus, in the log region of the linear log characteristic, there is no concept of the integration property. Therefore, only the overflowing conditions of the signal charges from the photoelectric conversion element PD to FD with respect to the incident light quantity is related with the output. Accordingly, even when the period to exhibit the linear log characteristic is a part of the exposure period TE, the linear log characteristic can be implemented.

Up to this point, in accordance with the present solid-state image capture device, the exposure period TE is divided into two periods of the first half period TF and the latter half period TB. In the first half period TF, the gate of the transfer transistor TX is applied with a negative bias voltage VL. For this reason, as compared with the case where in the overall period of the exposure period TE, driving is achieved with the intermediate potential VM, it is possible to more suppress the dark current generated at the interface between the substrate layer and the insulation layer at the underlying part of the gate of the transfer transistor TX.

Further, in the latter half period TB, the gate of the transfer transistor TX is applied with the intermediate potential VM for driving the pixel circuit GC with the linear log characteristic. For this reason, it is possible to expand the dynamic range of the pixel circuit GC.

Incidentally, in the above description, the exposure period TE was divided into two periods of the first half period TF and the latter half period TB. However, the present invention is not limited thereto. Namely, the following is also acceptable: the exposure period TE is divided into three or more periods; in at least one period, the pixel circuit GC is driven with the bias voltage VL; and in the remaining periods, the pixel circuit GC is driven with the intermediate potential VM.

Further, when the exposure period TE is divided into three or more periods, it may be configured that the period during which the pixel circuit GC is driven with the intermediate potential VM and the period during which the pixel circuit GC is driven with the bias voltage VL alternately occur.

Still further, in the above description, the bias voltage VL was assumed to be the one having a negative voltage value. However, the present invention is not limited thereto. Namely, even a positive voltage value can be adopted as the voltage value of the bias voltage VL so long as it has a voltage value equal to or smaller than the intermediate potential VM.

Furthermore, in the above description, as the transfer transistor TX, an n channel type MOS transistor was adopted. However, the present invention is not limited thereto. A p channel type MOS transistor may be adopted.

In this case, for the transfer transistor TX, as the absolute value of the negative voltage value increases, the opening degree of the gate increases. Therefore, the following procedure is desirable: in the first half period TF, a positive bias voltage VL is applied to suppress the dark current; and in the latter half period TB, a negative intermediate potential VM is applied, rendering the gate of the transfer transistor TX in an only half opened state, thereby to implement the linear log characteristic. In this case, a negative voltage value may be adopted as the bias voltage VL so long as it is a voltage value larger than the intermediate potential VM.

The technical features of the solid-state image capture device can be summarized as follows.

(1) A solid-state image capture device in accordance with one aspect of the present invention is a CMOS type solid-state image capture device including a pixel circuit having a linear log characteristic including a linear characteristic and a logarithmic characteristic with a knee point as a boundary. The pixel circuit includes: a buried type photoelectric conversion element for accumulating signal charges by exposure of an object; a floating diffusion for converting the signal charges accumulated by the photoelectric conversion element to a voltage signal; a transfer transistor for transferring the signal charges accumulated by the photoelectric conversion element to the floating diffusion; and a control part for controlling the pixel circuit such that an exposure period for causing the photoelectric conversion element to accumulate the signal charges and a transfer period for transferring the signal charges accumulated in the exposure period to the floating diffusion are repeated. The control part divides the exposure period into a plurality of periods so as to apply an intermediate potential for driving the pixel circuit with the linear log characteristic to a gate of the transfer transistor in at least one period, and apply a bias voltage having a voltage value in a direction of closing the gate more than the intermediate potential to the gate of the transfer transistor in the remaining periods of the exposure period.

With this configuration, the exposure period is divided into a plurality of periods. In at least one divided period, the gate of the transfer transistor is applied with the intermediate potential for driving the pixel circuit with the linear log characteristic. This allows the pixel circuit to have the linear log characteristic, which can expand the dynamic range of the pixel circuit.

Whereas, in the remaining periods of the divided exposure period, the gate of the transfer transistor is applied with a bias voltage having a voltage value in the direction of closing the gate more than the intermediate potential. For this reason, as compared with the case where driving is achieved with the intermediate potential throughout the overall period of one exposure period, it is possible to more suppress the dark current generated at the interface between the substrate layer and the insulation layer at the underlying part of the gate of the transfer transistor.

In other words, in the transfer transistor, as the opening degree of the gate increases, the dark current tends to increase. However, in some periods of the exposure period, the transfer transistor is driven in such a manner as to close the gate more compared with when driven with the intermediate potential. For this reason, it becomes possible to suppress the dark current generated at the transfer transistor that much more.

(2) It is preferable that the control part divides the exposure period into two periods of a first half period and a latter half period.

With this configuration, one exposure period is divided into the two periods of the first half period and the latter half period. Accordingly, it is possible to simplify the control.

(3) It is preferable that the control part applies the bias voltage to the gate in the first half period, and applies the intermediate potential to the gate in the latter half period.

With this configuration, the transfer transistor is driven with the bias voltage in the first half period of one exposure period, and is driven with the intermediate potential in the latter half period of one exposure period. Accordingly, it is possible to ensure the dynamic range. In other words, in the first half period, the bias voltage is applied, and in the latter half period, the intermediate potential is applied. This enables the photoelectric conversion element to accumulate signal charges with the linear characteristic in the first half period, and to accumulate signal charges with the linear log characteristic in the latter half period. As a result, even when a bright object is exposed, accumulation of signal charges without saturation becomes possible. Accordingly, the linear log characteristic is kept. Thus, it becomes possible to ensure the dynamic range.

(4) Preferably, the pixel circuits are arrayed in a matrix of N (N is an integer of 2 or more) rows x M (M is a positive integer) columns, thereby to form a pixel array part. The control part includes a vertical scanning part for cyclically selecting respective rows of the pixel array part. The vertical scanning part includes: N output parts corresponding to respective rows of the pixel array part, N selectors corresponding to respective rows of the pixel array part, a first shift register for cyclically selecting respective rows of the pixel array part each for a prescribed H period, and outputting a first selection signal to the selector and the output part corresponding to the selected row, and a second shift register for cyclically selecting respective rows of the pixel array part each for a H period after a delay of an n (n is an integer of 1 or more and N-1 or less) x H period from the first shift register, and outputting a second selection signal to the selector and the output part corresponding to the selected row. Each selector outputs the bias voltage to the output part of the corresponding row in a period between input of the first selection signal and input of the next second selection signal, while outputs the intermediate potential to the output part of the corresponding row in a period between input of the second selection signal and input of the next first selection signal. Each output part outputs an ON voltage to the gate of the transfer transistor of the pixel circuit of the corresponding row in a prescribed period shorter than the H period from input of the first selection signal, and outputs the bias voltage or the intermediate potential outputted from the selector to the gate in other periods.

With this configuration, by setting n in each pixel circuit, it becomes possible to change the output timing of the second selection signal. As a result, it is possible to adjust the length of the latter half period on the H period basis.

(5) Preferably, each output part includes an AND gate and an analog driver. Each AND gate outputs a high level signal to the analog driver of the corresponding row in the prescribed period from input of the first selection signal. Each analog driver outputs, when receiving a high level signal from the AND gate of the corresponding row, the ON voltage to the gate of the transfer transistor of the pixel circuit of the corresponding row, and outputs, when receiving a low level signal from the AND gate of the corresponding row, the bias voltage or the intermediate potential outputted from the selector to the gate.

With this configuration, the output part is formed of the analog driver. Accordingly, it is possible to readily perform switching between the ON voltage, the bias voltage, and the intermediate potential.

(6) It is preferable that the transfer transistor is an n channel type transistor, and that the bias voltage is a negative voltage.

With this configuration, the transfer transistor is formed of the n channel type transistor. For this reason, by applying the gate of the transfer transistor with a negative bias voltage, it becomes possible to generate holes on the bottom side of the gate of the transfer transistor. As a result, electrons generating at the gate combine with holes, which can further suppress the dark current.

## Claims

1. A CMOS type solid-state image capture device comprising a pixel circuit having a linear log characteristic including a linear characteristic and a logarithmic characteristic with a knee point as a boundary,
wherein the pixel circuit includes:
a buried type photoelectric conversion element for accumulating signal charges by exposure of an object;
a floating diffusion for converting the signal charges accumulated by the photoelectric conversion element to a voltage signal;
a transfer transistor for transferring the signal charges accumulated by the photoelectric conversion element to the floating diffusion; and
a control part for controlling the pixel circuit such that an exposure period for causing the photoelectric conversion element to accumulate the signal charges and a transfer period for transferring the signal charges accumulated in the exposure period to the floating diffusion are repeated,
wherein the control part divides the exposure period into a plurality of periods so as to apply an intermediate potential for driving the pixel circuit with the linear log characteristic to a gate of the transfer transistor in at least one period, and apply a bias voltage having a voltage value in a direction of closing the gate more than the intermediate potential to the gate of the transfer transistor in the remaining periods of the exposure period.

2. The solid-state image capture device according to claim 1, wherein the control part divides the exposure period into two periods of a first half period and a latter half period.

3. The solid-state image capture device according to claim 2, wherein the control part applies the bias voltage to the gate in the first half period, and applies the intermediate potential to the gate in the latter half period.

4. The solid-state image capture device according to claim 3,
wherein the pixel circuits are arrayed in a matrix of N (N is an integer of 2 or more) rows x M (M is a positive integer) columns, thereby to form a pixel array part, and
the control part includes a vertical scanning part for cyclically selecting respective rows of the pixel array part,
the vertical scanning part including:
N output parts corresponding to respective rows of the pixel array part,
N selectors corresponding to respective rows of the pixel array part,
a first shift register for cyclically selecting respective rows of the pixel array part each for a prescribed H period, and outputting a first selection signal to the selector and the output part corresponding to the selected row, and
a second shift register for cyclically selecting respective rows of the pixel array part each for a H period after a delay of an n (n is an integer of 1 or more and N-1 or less) x H period from the first shift register, and outputting a second selection signal to the selector and the output part corresponding to the selected row,
each selector outputting the bias voltage to the output part of the corresponding row in a period between input of the first selection signal and input of the next second selection signal, while outputting the intermediate potential to the output part of the corresponding row in a period between input of the second selection signal and input of the next first selection signal, and
each output part outputting an ON voltage to the gate of the transfer transistor of the pixel circuit of the corresponding row in a prescribed period shorter than the H period from input of the first selection signal, and outputting the bias voltage or the intermediate potential outputted from the selector to the gate in other periods.

5. The solid-state image capture device according to claim 4,
wherein each output part includes an AND gate and an analog driver,
each AND gate outputting a high level signal to the analog driver of the corresponding row in the prescribed period from input of the first selection signal, and
each analog driver outputting, when receiving a high level signal from the AND gate of the corresponding row, the ON voltage to the gate of the transfer transistor of the pixel circuit of the corresponding row, and outputting, when receiving a low level signal from the AND gate of the corresponding row, the bias voltage or the intermediate potential outputted from the selector to the gate.

6. The solid-state image capture device according to claim 1, wherein
the transfer transistor is an n channel type transistor, and
the bias voltage is a negative voltage.
